# DEMANDE DE BREVET EUROPEEN

(11) **EP 1 431 118 A2**
(43) Date de publication de la demande: **23.06.2004**
(21) Numéro de dépôt: 03405750.5
(22) Date de dépôt: 17.10.2003
(51) Int. Cl.: B60Q 1/076, B60Q 1/12

(54) **Actionneur pour unité de phare**

(30) Priorité: 17.12.2002 CH 20022145
(71) Demandeur: SAIA-Burgess Murten AG, 3280 Murten (CH)
(72) Inventeur: Bourqui, Yvan, 1720 Corminboeuf (CH)
(74) Mandataire: AMMANN INGENIEURS-CONSEILS EN PROPRIETE INTELLECTUELLE SA BERNE

(57) **Abrégé**

Un actionneur (14) pour une unité de phare (1) permettant l'orientation du projecteur (5) de lumière comprend un élément de détection (30, 32) d'une position de référence et une commande pour son moteur (26). Le projecteur (5) est fixé sur l'actionneur (14) d'une manière que par l'action de ce dernier, il peut être tourné dans le plan horizontal. Cette unité de phare (1) peut être intégrée dans une voiture essentiellement comme un phare conventionnel, mais offre la possibilité de diriger les faisceaux de lumière dans la direction d'une courbe. Grâce au circuit de commande (28), de préférence intégré, des commandes standardisées fournies par l'unité centrale de la voiture suffissent pour actionner ce mouvement des phares.

## Description

La présente invention a pour objet un actionneur pour une unité de phare, notamment pour un véhicule, selon le préambule de la revendication 1.

Pour améliorer la visibilité en courbe lors de la conduite nocturne ou par mauvais temps, il est souhaitable d'orienter le faisceau de lumière créé par les phares d'un véhicule dans la direction du virage à négocier.

Un mécanisme doit être utilisé pour positionner le projecteur avec l'angle désiré et obtenir ainsi l'éclairage de la courbe. Ce mécanisme de positionnement doit également pouvoir ramener le projecteur précisément à la position initiale ou position milieu, c'est-à-dire le réorienter dans le sens d'avancement, lorsque le véhicule roule en ligne droite, ceci afin d'éviter l'éblouissement du trafic venant en sens inverse. Dans le texte ci-dessous, cette fonction d'orientation du projecteur est désignée par le simple terme «fonction d'orientation horizontale».

Un détecteur de point milieu est utilisé pour contrôler la position angulaire du projecteur et sert de référence pour déterminer la position de ce dernier. Cette référence peut être utilisée pour le réglage de l'angle initial du système. Il est également possible de définir plusieurs points de référence avec plusieurs fonctions.

Les systèmes actuels tels que décrits dans la demande de brevet européen no 02/405 387.8 de la déposante, déposée le 14 mai 2002, sont réalisés avec plusieurs éléments discrets liés mécaniquement et électriquement entre eux. Viennent s'ajouter à un système sans orientation latérale, pour que la fonction précitée soit exercée, un moteur électrique (rotatif ou linéaire), un ensemble d'éléments mécaniques et un capteur de point milieu (par exemple sonde de Hall ou microrupteur). Par conséquent, des éléments de connexion mécaniques et électriques sont nécessaires. Le montage de ces éléments discrets est compliqué, coûteux et source de problèmes potentiels de qualité de fonctionnement et de fiabilité.

L'objet de l'invention est de proposer un actionneur pour unité de phare plus facile à intégrer dans cette unité de phare et qui pallie les inconvénients rencontrés avec les éléments discrets connus.

Ce but est atteint grâce aux moyens définis dans la revendication 1. Les revendications dépendantes définissent des exécutions préférées et à bon compte.

L'unité de phare - ci-après dénommée «phare» - est formée d'n ensemble comprenant un projecteur intégrant un moyen lumineux et un actionneur pourvu d'un support. Le projecteur est couplé mécaniquement à l'actionneur de sorte à avoir une aptitude de pivotement dans un plan dit horizontal. Grâce au support qui comporte des moyens de fixation, cet ensemble peut être intégré dans la construction d'une voiture à l'instar pratiquement d'un phare conventionnel, tout en permettant au projecteur une aptitude au mouvement latéral, c.-à-d. dans le plan horizontal.

Selon une forme d'exécution préférée, l'actionneur intègre de façon monolithique toutes les fonctions nécessaires pour un mouvement pivotant horizontal. Il n'est donc plus nécessaire de monter plusieurs composants discrets et de les connecter pour obtenir la fonction d'orientation horizontale. Le projecteur est simplement lié mécaniquement à l'actionneur par un accouplement sans jeu.

Cet actionneur comporte les éléments suivants :
- Un moteur électrique ou, comme variante, deux moteurs électriques;
- Un réducteur à train d'engrenages ou, comme variante, une transformation du mouvement de rotation en mouvement linéaire par l'intermédiaire d'un système vis-écrou;
- Un élément d'entraînement pour mouvoir le projecteur;
- Un capteur de détection du point milieu ou de la zone médiane ou des points de référence (sonde Hall, microrupteur, potentiomètre, élément optique,...);
- Comme option, une électronique de commande intégrée dans l'actionneur afin de commander le moteur et de traiter les informations des capteurs. Cette électronique peut communiquer avec le module de commande par un système de bus.

Un variante consiste à intégrer deux moteurs dans le l'actionneur. L'un des moteurs commande l'orientation latérale (ou angulaire) du projecteur telle qu'evoquée ci-dessus, l'autre son orientation dans un plan vertical. L'orientation verticale est utilisée pour régler la portée du faisceau de lumière générée par le projecteur. Cette fonction existe déjà, mais est réalisée par un actionneur séparé, avec les désavantages déjà cités.

Grâce à ces mesures, on obtient les avantages suivants:
- Simplicité de montage;
- Coûts plus bas;
- Système fermé et de ce fait mieux protégé.

Quant à l'actionneur à électronique intégrée et système de communication par bus, il offre une utilisation plus facile pour le constructeur automobile: ce dernier ne doit pas connaître les règles de pilotage du moteur ni traiter les informations du capteur. Il lui suffit de transmettre des ordres standardisés qui seront traités et exécutés par l'actionneur.

On va décrire ci-après, à titre d'exemples non limitatifs, des formes d'exécution préférées de l'invention, à l'appui des dessins annexés où:
- les fig. 1 et 2: sont des vues de dessus du phare selon l'invention, en position droite et tourné à droite respectivement,
- la fig. 3: est une vue en perspective du phare et de l'actionneur,
- la fig. 4: montre les composants internes de l'actionneur
- la fig. 5: montre les détails du train d'engrenages, vus en perspective,
- la fig. 6: représente en perspective une deuxième forme d'exécution d'un phare selon l'invention,
- la fig. 7: est une illustration partielle en perspective de l'actionneur pour le phare selon la fig. 6, et
- les fig. 8 et 9: montrent le principe d'un autre mouvement pour l'actionneur selon l'invention, en perspective et en vue de côté.

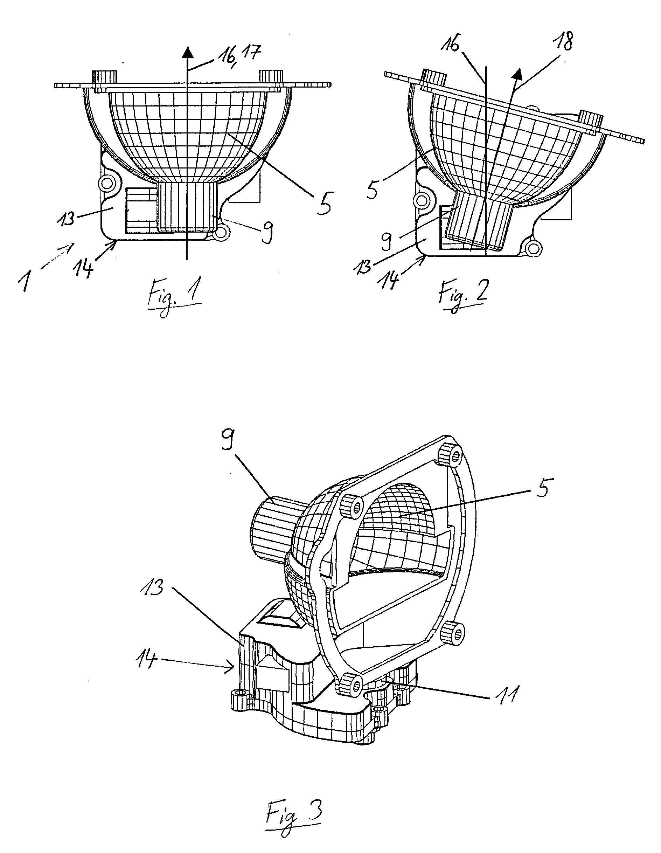

Les figures 1-5 montrent un premier exemple d'un phare 1 ou une unité de phare selon l'invention. Sur un support 3 est agencé le projecteur 5 avec le moyen lumineux dont seulement la douille 9 est visible. Le projecteur 5 est agencé sur un arbre 11 qui passe par le boîtier de l'actionneur, lequel arbre est logé à l'intérieur de ce dernier. Le projecteur 5 est construit et fixé à l'arbre 11 de sorte qu'une autre fixation n'est pas exigée, mais avantageuse. Aussi, selon cette variante préférée, une deuxième fixation permettant un pivotement, notamment agencée dans l'axe de pivotement diamétralement opposé à la fixation à l'actionneur, est prevue pour stabiliser le projecteur eu égard aux vibrations et secousses qui surviennent lors de l'utilisation d'un véhicule.

Remarque étant faite que toute l'unité de phare peut être montée dans un boîtier. Ce boîtier peut être disposé dans le châssis ou la carosserie du véhicule, pratiquement comme un phare traditionnel, à l'exception du connecteur destiné à fournir l'énergie et les signaux de commande à l'actionneur. Rien ne change, donc, pour le constructeur d'automobiles qui ne doit prévoir que les fixations habituelles pour un phare conventionnel et le connecteur électrique. Le fabricant de phares, quant à lui, agence notamment l'ensemble actionneur-projecteur dans le boîtier extérieur, ce dernier pouvant ainsi être adapté sans difficultés au design de la carrosserie de la voiture.

Revenant sur l'unité de phare selon les figures 1-5, en imprimant un mouvement à l'arbre, le projecteur (ou source de lumière) 5 peut pivoter à droite et à gauche. La figure 1 montre la source en position droite, indiquée par la ligne 16 coïncidant avec la flèche 17 indiquant l'orientation du projecteur. La figure 2 montre la position du phare où les feux sont dirigés vers la droite dans une direction marquée par la flèche 18. L'arbre 11 du projecteur 5 passe par une manchette 20 à laquelle il est fixé, ou dans laquelle il est inséré et tenu par le poids du projecteur 5. Grâce à la section de l'arbre 11, par exemple polygonale, et du trou dans la manchette 20, les deux éléments, arbre et manchette, sont liés en rotation l'un par rapport à l'autre.

La manchette 20 est montée sur une plaque tournante 3 logée dans un boîtier 13 de l'actionneur 14. A la périphérie de la plaque se trouve une denture 22, dans laquelle engrène la partie avant d'une roue dentée 23. La partie arrière de cette roue dentée 23, qui comporte un plus grand nombre de dents, engrène dans la vis sans fin 25 à denture hélicoïdale prolongeant l'arbre d'entraînement d'un moteur électrique 27. Cet agencement de roues dentées constitue un réducteur à train d'engrenages. Ainsi, selon le sens de rotation du moteur, le projecteur 5 peut être repositionné dans un plan horizontal vers la droite ou la gauche, c'est-à-dire dans un plan parallèle à le base du boîtier et à la plaque de support 3.

La fixation et le guidage du réflecteur ou projecteur 5 doivent être réalisés de manière à assurer un jeu minimum, afin d'éviter que les vibrations produites par le roulage de la voiture produisent des oscillations du faisceau lumineux. Pour réduire le jeu d'engrenage angulaire entre la denture de la roue dentée 23 et la denture 22, ces dentures sont coniques et soumises à une prétension.

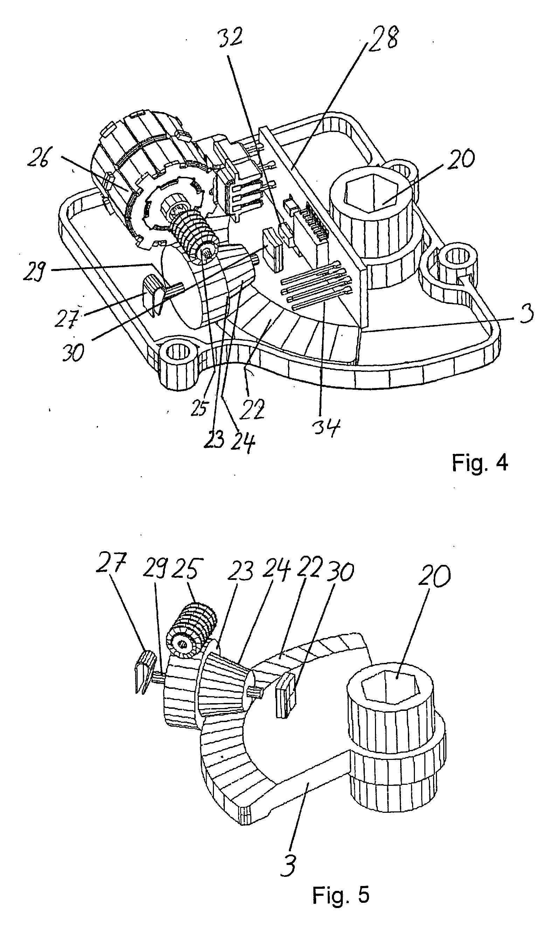

A cette fin, comme illustré dans la figure 5, la partie avant de la roue dentée 23 est réalisée sous forme d'un pignon conique 24, et complémentairement, la denture 22 de la plaque rotative 3 est conique elle-aussi. Un ressort 27 exerce une force sur la face arrière de l'arbre 29 de la roue dentée 23. Cette force pousse le pignon conique 24 vers le sommet de la denture 22, réduisant en même temps le jeu de cet engrenage conique quasiment à zéro. On observe, qu'un jeu entre la vis sans fin 25 et la roue dentée 23 est minimum grâce à un agencement précis du moteur par rapport à la roue dentée 23. A cette fin, il serait aussi possible d'appuyer le moteur, ou plutôt la vis sans fin 25, contre la roue 23.

Bien entendu, du fait de la réduction générée par l'étage d'engrenages constitué par le pignon 24 et la denture 22, l'effet d'un jeu entre la vis sans fin 25 et la roue dentée 23 et, le cas échéant, d'autres étages d'engrenages précédant celui du pignon 24/denture 22, est diminué. Par ce fait, ces étages d'engrenages peuvent être réalisés sans mesures additionnelles visant à diminuer le jeu.

L'énergie électrique pour le moteur 26 est fournie par le circuit de commande 28 réalisé comme circuit imprimé. Ce circuit 28 est capable de réagir à des commandes numériques reçues de l'extérieur et d'activer le moteur 26 de façon appropriée pour que le projecteur 5 soit dirigé dans une direction définie par la commande numérique.

Le circuit de commande peut redresser le projecteur en position neutre ou position milieu, où le faisceau de lumière est projeté tout droit (ligne 16 dans la figure 1) par rapport au boîtier 13. Dans ce but, un aimant 30 est fixé sur la plaque rotative 3, tandis que sur le circuit de commande 28 est prévu un senseur magnétosensitif 32 à effet Hall, placé de sorte que la distance ou l'éloignement entre le senseur 32 et l'aimant est minimale lorsque le projecteur est en position droite. En déterminant le signal fourni par le senseur Hall 32, le circuit de commande 28 peut donc déterminer la position neutre. Pour tourner le projecteur d'un angle, l'arbre du moteur 26 effectue un certain nombre de tours. Selon l'exemple, le moteur 26 est de préférence du type pas-à-pas, mais tout autre genre de moteur ou dispositif permettant un contrôle exact, est utilisable, par exemple avec un moyen de mesure de rotation intégré. Alternativement, une des roues dentées ou tout autre élément se déplaçant durant le changement de direction du projecteur peut être muni d'un moyen de mesure de déplacement angulaire.

De manière générale, pour une pluralité de positions de référence, dont l'une constitue la position neutre, au moins un aimant et au moins un senseur sont prévus, de façon à permettre que les positions des aimants relatives à celles des senseurs fournissent en option un codage numérique du positionnement.

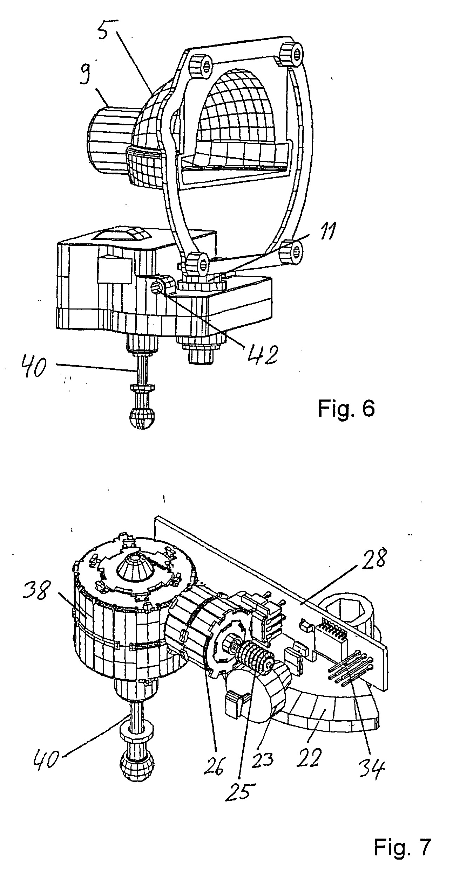

Quant à la connexion électrique, on peut distinguer entre les connexions pour fournir de l'énergie au circuit de commande et la connexion pour les signaux de commande numériques, par exemple sous forme d'une connexion d'un bus ou réseau numérique interne d'une voiture (cf. arrangement 34 de bornes de connexion, figures 4 et 6).

Il est également concevable de combiner ces deux connexions d'une manière connue en soi, par exemple par superposition des signaux numériques à la tension et/ou au courant électrique d'alimentation.

Les figures 6 et 7 montrent une deuxième forme d'exécution, celle-ci permettant un ajustement du projecteur dans le plan vertical. Dans ce but, l'unité comprend un second moteur 38 pourvu d'une tige verticale 40 et est logée avec une aptitude au pivotement autour de l'oeil 42 dans le châssis d'une voiture. En déplaçant la fin de la tige 40, il est possible d'ajuster l'inclinaison verticale du phare et donc la portée du faisceau de lumière. Evidemment, cette inclinaison sera de même contrôlée par le circuit de commande 28 et choisie de l'extérieur par la connexion susmentionnée.

En résumé, l'unité de phare décrite est intégrable dans une voiture essentiellement de la même manière qu'un phare conventionnel, et pour le contrôle de la direction latérale, il est simplement nécessaire de la connecter á un système de contrôle digital. De plus, le phare se remet en position neutre soit sur simple commande, soit automatiquement.

Selon un autre système intéressant comme alternative au capteur à effet Hall, à la partie mobile 3 est fixée une bobine avec un noyau en fer doux. Dans le boîtier 13 est fixé un composant identique. En position milieu, les deux noyaux sont alignés et le couplage électromagnétique entre les deux bobines est maximum. Lors d'un déplacement angulaire de la partie mobile 3 se produit une diminution du couplage entre les deux bobines provoquée par le non-alignement des noyaux. L'électronique intégrée mesure le couplage électromagnétique en envoyant des impulses électriques dans l'une des bobines et en mesurant la tension induite dans l'autre bobine. L'électronique en déduit la position angulaire.

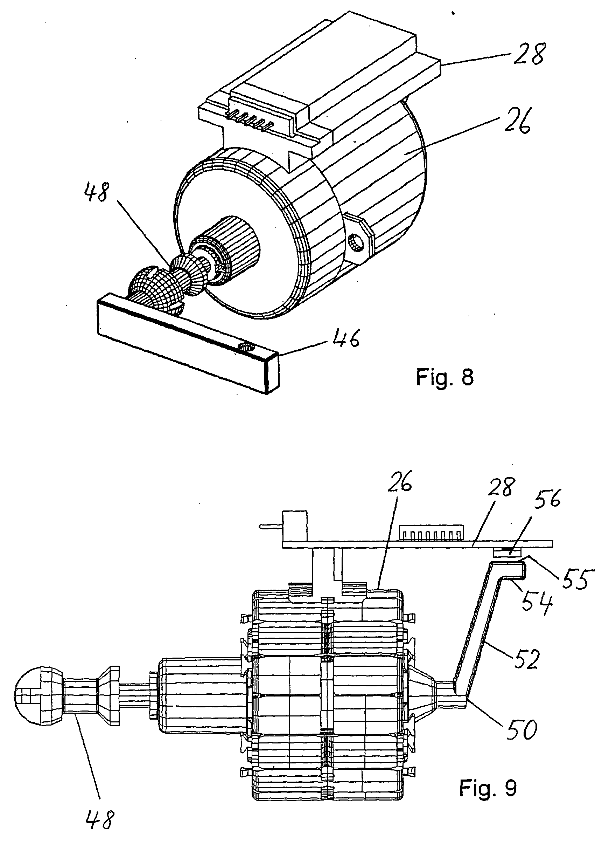

Une variante d'exécution montrée dans les figures 8 et 9 se base sur un actionneur 14 utilisant un mouvement linéaire pour faire pivoter le projecteur 5 autour de son axe vertical par l'intermédiaire d'un levier 46. La figure 8 montre le moteur 26, ici muni d'un arbre 48 à mouvement linéaire. L'arbre 48 s'engage dans le levier 46 d'une manière articulée, par exemple au moyen d'un élément de liaison à rotule. Le levier 48 est fonctionnellement lié avec le logement pivotable du projecteur 5. En construisant l'actionneur selon les exemples d'exécution décrits plus haut, le levier peut être attaché à la plaque rotative 3 ou directement à la manchette 20.

Selon la Fig. 9, le bout arrière 50 de l'arbre du moteur 26 est muni d'un bras 52. A son extrémité 54, le bras 52 porte un aimant permanent 55. Un senseur 56 sensible au champ magnétique, p.ex. un senseur Hall, est agencé de telle façon que l'aimant 55 passe au-dessous du senseur 56 quand l'arbre du moteur 26 tourne. Le senseur est monté sur une face du circuit intégré 28, ce qui facilite sensiblement la production et le montage. Par cet arrangement senseur 56/aimant 55 sur le bras 52, la commande électronique peut déterminer la position du moteur 26 et par conséquent la position angulaire du projecteur 5, particulièrement la position milieu. Dans le cas le plus simple, moins d'un tour de moteur 26 est suffisant pour parcourir la plage totale de mouvement angulaire du projecteur. Par conséquent, la position la plus proche de l'aimant par rapport au senseur 56 signifie une position sans ambiguïté angulaire de référence.

Ce mode d'exécution a en outre la même structure que ceux décrits plus haut. Remarque étant faite que le moteur 26 est préférablement un moteur pas-à-pas, ce qui permet de contrôler avec exactitude la position du projecteur.

Sur la base de la description ci-dessus, il est aisé pour le spécialiste de concevoir des modifications ou d'autres exemples d'exécution sans sortir du domaine de l'invention défini par les revendications.

## Revendications

1. Actionneur (14) pour une unité de phare (1) pour un véhicule, comprenant un projecteur (5) pour créer un faisceau de lumière dirigé, **caractérise en ce que** l'actionneur comprend un support de base, un élément de liaison pivotant (20) sur lequel le projecteur (5) peut être monté rotatif dans un premier plan (17, 18), un moteur (26) fonctionnellement lié avec l'élément de liaison pivotant, et au moins un moyen de mesure capable de détecter au moins une position angulaire de référence de l'élément de liaison.

2. Actionneur (14) selon la revendication 1, **caractérisé en ce que** l'unité comprend également une commande (28) contrôlant le mouvement du moteur (26).

3. Actionneur (14) selon la revendication 2, **caractérisé en ce que** le moyen de mesure est connecté à la commande (28), permettant de déterminer la position de référence.

4. Actionneur (14) selon l'une des revendications 1 à 3, **caractérisé en ce que** le moyen de mesure de position angulaire consiste en au moins un senseur magnétosensitif, notamment de type Hall, et au moins un aimant, l'un étant monté sur un élément se déplaçant avec la rotation du projecteur, l'autre étant monté en position fixe, de sorte que le signal fourni du senseur en fonction de la distance séparant l'aimant du senseur magnétosensitif permet de déterminer la position angulaire du projecteur (5).

5. Actionneur (14) selon l'une des revendications 1 à 4, **caractérisé en ce que** le moyen de mesure comprend deux bobines, préférablement avec des noyaux en fer doux, l'une étant montée sur un élément se déplaçant avec la rotation du projecteur (5), l'autre étant montée à une position fixe, de sorte que si un signal à fréquence appropriée est fourni à l'une des bobines, l'amplitude du signal induit dans l'autre bobine peut être utilisée pour déterminer la distance des bobines, donc la position angulaire du projecteur.

6. Actionneur (14) selon l'une des revendications 1 à 5, **caractérisé en ce qu'**il comprend un deuxième moteur (38) pourvu d'une tige (40), et que le support de base comporte un moyen de fixation (42) permettant un mouvement orthogonal à l'axe de rotation du projecteur, afin de permettre à l'actionneur et par conséquent à l'unité de phare d'effectuer un mouvement rotatif dans un deuxième plan grâce à l'action du mouvement de la tige (40) du deuxième moteur (38).

7. Actionneur (14) selon l'une des revendications 1 à 6, **caracterisé en ce qu'**il constitue une unité compacte enfermée dans un boîtier (13), le projecteur étant tenu par l'élément de liaison (20) accessible de l'extérieur du boîtier.

8. Actionneur (14) selon l'une des revendications 1 à 7, **caractérisé en ce qu'**au moins le dernier étage d'engrenages entre le moteur (26) et l'élément de liaison (20) pour le projecteur (5) consiste essentiellement en deux éléments dentés (24, 22) à denture conique, dont l'un est pressé contre l'autre par l'action d'un organe élastique (27) afin de diminuer le jeu de cet étage d'engrenages.

9. Actionneur (14) selon la revendication 8, **caractérisé en ce que** les étages d'engrenages à jeu diminué, préférablement le dernier étage d'engrenages, produisent une telle réduction que le jeu de l'étage ou des étages d'engrenages précédents n'a pas d'influence sensible sur le jeu total d'engrenages entre le moteur (26) et l'élément de liaison(20).

10. Unité de phare (1) pour une voiture, comprenant un actionneur (14) selon l'une des revendications 1 à 9 combiné avec un projecteur (5), l'actionneur avec le projecteur étant monté dans un boîtier extérieur et les bornes de connexion électriques étant accessibles de l'extérieur du boîtier extérieur, afin de pouvoir intégrer l'unité de phare similaire à un phare conventionnel, tout en pouvant contrôler l'orientation horizontale des faisceaux de lumière émis par l'unité de phare grâce à des signaux de commande électriques.
